Europäisches Patentamt

(19) European Patent Office

Office européen des brevets

(11) Publication number: **0 176 536**
**B1**

(12) **EUROPEAN PATENT SPECIFICATION**

(45) Date of publication of patent specification: 05.07.89

(51) Int. Cl.⁴: **C 21 C 7/00,** F 27 D 3/15, B 22 D 43/00, C 22 B 7/04

(21) Application number: 85901487.0

(22) Date of filing: 20.03.85

(86) International application number:
PCT/GB85/00109

(87) International publication number:
WO 85/04191 26.09.85 Gazette 85/21

(54) APPARATUS FOR AND A METHOD OF REMOVING MATERIAL.

(30) Priority: 21.03.84 GB 8407363

(43) Date of publication of application:
09.04.86 Bulletin 86/15

(45) Publication of the grant of the patent:
05.07.89 Bulletin 89/27

(84) Designated Contracting States:
AT BE CH DE FR GB LI LU NL SE

(56) References cited:
EP-A-0 060 706
DE-A-2 908 233
FR-A-2 354 384
US-A-3 857 651

Patent Abstracts of Japan, vol. 7, no. 12,
(M-186)(1157), 19. January 1983, SCUM
REMOVER

(73) Proprietor: British Steel Corporation
9 Albert Embankment
London SE1 7SN (GB)

(72) Inventor: HAWKINS, Richard John
8 Byemoor Avenue Great Ayton
North Yorkshire TS9 6JP (GB)
Inventor: SABHARWAL, Anil Kumar
3 Coombe Way Hartburn, Stockton-On-Tees
Cleveland TS18 5PX (GB)
Inventor: ROBERTSON, Thomas
24 Sunningdale Walk
Eaglescliffe, Cleveland TS16 9HJ (GB)
Inventor: PERRY, Robert, Maidens
4 Skurgill
Egremont, Cumbria CA22 2NS (GB)

(74) Representative: Kirk, Geoffrey Thomas
BATCHELLOR, KIRK & EYLES 2 Pear Tree Court
Farringdon Road
London EC1R 0DS (GB)

Courier Press, Leamington Spa, England.

## Description

This invention relates to apparatus for and a method of removing material forming a layer on a surface.

More particularly, but not exclusively, the invention concerns the removal of slag or similar materials from the surface of a liquid metal, e.g. molten iron or steel.

Conventionally, slag is removed from the surface of the liquid metal contained in a vessel, such as a ladle, by raking manually the liquid surface or by means of a mechanical vacuum suction pump.

Manual raking is not satisfactory for reasons of inefficiency in that fluid slag readily flows around the rake edges and complete slag removal is difficult, whilst liquid metal can be lost both during raking and ladle tilting.

Mechanical vacuum pumps can only be used in suction systems incorporating a complete seal at all joints and involve the use of considerable amounts of cooling water directly injected into the suction pipe to ensure solidification of slag immediately it enters the suction pipe. The presence of cooling water is a potential cause of explosion should it become mixed with the liquid metal and may result in injury to plant operatives. Such equipment is complex and maintenance intensive which reflects in its relative expensive capital and running costs.

It is known from DE—A—2908233 to employ a single-housing multi-stage jet blower to extract water from a drill hole. Each stage is an annular jet nozzle and the stages are contained in a single tubular external housing.

It is known from US—A—3857651 for coaxial pumping units to comprise an open-ended pipe defining a passage between an inlet end and a discharge end; means for supporting the pipe with the discharge end at a high level than the inlet end; an injector assembly having at least one nozzle located in the passage and means for supplying gas under pressure to the injector.

According to the present invention, there is provided a method of removing material forming a layer on a surface in which an open-ended pipe, defining a passage between an inlet end and a discharge end, is positioned with the inlet end close to, but above, the material on the surface and the discharge end at a higher level than the inlet end, said pipe having an injector assembly with at least one nozzle located in the passage; primary gas under pressure is supplied to the injector assembly, the flow of said primary gas causing a flow of secondary air to be introduced into the inlet end of the pipe which draws in the material into the inlet end of the pipe and discharges it from the discharge end; characterised in that the cross-sectional area of the passage from the injector to the discharge end of the pipe is not less than the cross-sectional area of the passage at the injector and the primary gas is caused to flow substantially parallel to the longitudinal axis of the passage directly to the discharge end of the pipe and the flow of secondary air causes material to form a peak beneath the inlet end of the pipe from where the material is drawn into the pipe.

According to the present invention in another aspect, there is provided apparatus for removing material forming a layer on a surface comprising an open-ended pipe defining a passage between an inlet end and a discharge end; means for supporting the pipe with the inlet end close to, but above, the material on the surface and the discharge end at a higher level than the inlet end; an injector assembly having at least one nozzle located in the passage and means for supplying gas under pressure to the injector; characterised in that the cross-sectional area of the passage from the injector to the discharge end of the pipe is not less than the cross-sectional area of the passage at the injector.

Optional features of the invention are comprised in the dependent claims.

The ejector pipe is preferably formed from a plurality of tubular sections joined together to define the required flow path of gas and particles passing therethrough. In one arrangement, each pipe section includes at least one injector connectible to a source of gas under pressure and formed with at least one injection nozzle. The pressure of the gas admitted to the or each injector and its direction of entry into the ejector pipe may vary along the height and circumference of the pipe.

The gas under pressure may, for example, be air or other readily available suitable compressed gaseous fluid.

The ejector pipe may be supported above the surface of the material to be removed by a vertically movable frame mounted for pivotal movement in a direction transverse to the material surface. The vertical movement of the frame is preferably determined in such a way that the distance between the surface of the material and the lower edge of the pipe remains no more than a pre-set dimension by incorporation of a suitable transducer and control mechanism. The pre-set height may be set to suit the individual pipe assembly and its inlet fluid flow and pressure. One method of measuring the height of the pipe above the liquid surface is a line-of-sight optical system as used for casting machine mould level control.

The removal of liquid slag by means of a pipe as described can lead to blockage of the device as liquid slag freezes and adheres to the walls of the device to fill the internal diameter.

The pipe can be adapted to include one or more features designed to pevent blockage. One such feature is the manufacture of the bottom tip section of the pipe in a heat resistant material such as refractory. This section may be detachably connected to the adjacent pipe section. Another feature may be lining the internal diameter of each pipe section with an insulating material such as refractory.

The pipe walls, the primary gas and the induced air flow are the main means by which the slag cools. This cooling can be reduced by, for example, the addition of liquid or gaseous fuel to heat the induced air flow over and above that received from the liquid surface. This can be achieved by adding gaseous or liquid fuel in a controlled manner into the device through the injector nozzles along with the primary gas flow or from external burners suitably located around the outside of the bottom pipe section.

Blockage of the internal diameter can alternatively be prevented by freezing the liquid slag so that it cannot adhere to the walls of the pipe. The pipe can be adapted to include for the addition of a coolant in a controlled manner into the device via the injector nozzles into the ejector pipe along with the primary gas flow. The coolant may be water which in conjunction with the primary gas flow forms a mist giving excellent heat removal characteristics at minimum water flows as well as being fail safe in that if the primary air supply ceases, so would the flow of water.

In any of the adaptations outlined previously, it is possible that some slag may adhere to the internal diameter of the pipe. Thus slag build-up can be readily removed by vibration or percussive impact of the ejector pipe to shake the slag from the walls.

The invention will now be described by way of example with reference to the accompanying diagrammatic drawings in which:—

Figure 1 is a longitudinal section taken through apparatus in accordance with the invention;

Figure 2 schematically illustrates four alternative constructions of pipes in accordance with the invention;

Figure 3 is an elevational view partly in section of the apparatus illustrated in Figure 1 and handling apparatus therefore; and

Figures 4 and 5 are respectively side elevational and plan views of alternative handling apparatus to that illustrated in Figure 3.

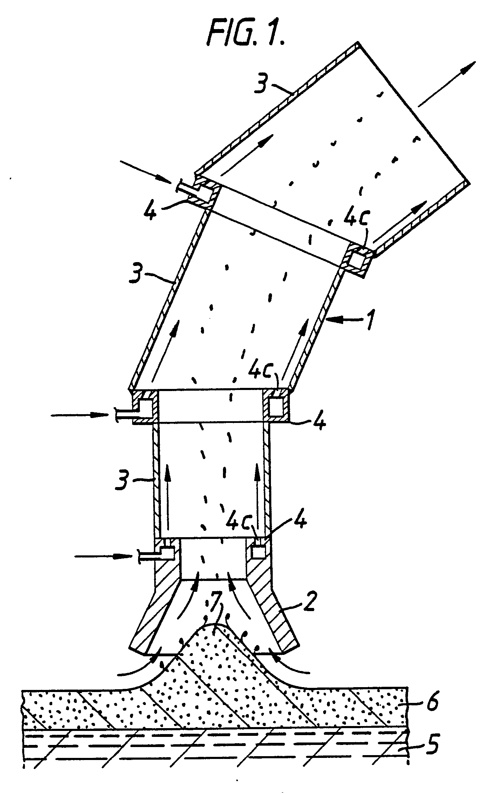

The apparatus illustrated in Figure 1 comprises an ejector pipe 1 including a tip and a plurality of connected tubular sections 3 each including an annular injector assembly 4 formed with an array of discharge nozzles 4c and connected to a supply of gas under pressure, e.g. air or inert gas where chemical reaction is to be avoided. As illustrated, the tip section 2 of the pipe 1 is positioned a small distance above the surface of a bath of liquid metal 5 contained in a vessel, e.g. a ladle. A slag layer 6 is formed on the surface of the liquid metal which should be removed to improve the efficiency of further processing of the liquid metal. The tip section 2 has a shaped entry and is manufactured from a consumable material, preferably one with a high melting point, e.g. refractory material. The sections 3 may be manufactured from tubular steel and the injector assemblies 4 from any suitable material, these including steel or ceramic. The tip 2 is preferably connected to the adjacent end of the adjacent pipe section 3 by a simple arrangement of pins and clips or is bolted thereto for ease of replacement. The sections 3 may be joined together by any suitable means such as welding.

The assembled sections 3 define the path to be taken by the flow of gas through the pipe 1. As illustrated, the sections 3 define an arcuate flow such that the removed material is ejected from the discharge end of the pipe 1 and falls clear of the bath of liquid material and its containment vessel.

Controlled amounts of a fluid coolant, e.g. water, may be introduced into the pipe 1 through the injector nozzles 4c at locations remote from the tip section 2 to aid solidifcation of particles of liquid slag drawn through the pipe 1.

A liquid or gaseous fuel may be combusted to produce heat to maintain the slag in a molten state and prevent it from adhering to the internal walls of the pipe. The fuel may be added through the injector nozzles or alternatively be introduced through burner nozzles mounted on the outside of the ejector pipe to heat the induced air flow over and above that received from the surface of the slag layer 6.

In operation of the illustrated apparatus the pipe 1 is suspended from support trunnions secured around the upper end of the pipe to ensure that the pipe is maintained vertically over the free surface of the bath. Compressed primary gas is introduced into the pipe 1 through the injector assemblies 4 to create an upward flow of compressed primary gas which flow is substantially parallel to the internal surfaces of the sections 3. The flow of primary gas to each injector nozzle 4c may be controlled to achieve an even or varied flow along the length of the pipe. Similarly, the pattern of the nozzles 4c may be selected to provide a given flow pattern. In addition, the direction and angle at which the flow of secondary gas is introduced into the ejector pipe may be selected by suitable design of the injector nozzles. Thus, the flow of secondary gas may initially be directed parallel to the longitudinal axis of the respective pipe section 3 or inclined thereto.

The height of the slag suction apparatus is selected and the pressure of the primary gas injected into the pipe 1 is maintained at a level sufficient to produce a gas flow capable of lifting particles of the less dense slag and transporting them through the pipe 1 and over the edge of the containing vessel, but incapable of lifting particles of the denser liquid metal below the slag layer.

The pressurised primary gas injected into the pipe 1 through the injector assemblies 4 reduces the pressure existing at the shaped entry of the tip pipe section 2 to a level below atmospheric or that pertaining above the free surface of the slag to induce a flow of gas into the shaped entry and through the pipe 1. This induced gas flow mixes with the gas injected through the nozzles 4c and is discharged through the open discharge end of the pipe. The reduced pressure at the shaped inlet end of the pipe causes a peak 7 of slag to form below the inlet end with the result that the flow of gas drawn into the pipe over the slag peak shears droplets from the slag surface which are drawn into the pipe by the gas flow.

As droplets pass upwardly through the pipe they are cooled and further fragmented by the compressed gas introduced through the injector assemblies 4. Solidification of the slag particles may be aided by coolant introduced into the pipe at locations remote from the tip. Alternatively to prevent solidification liquid or gaseous fuel may be introduced continuously or during specific periods during slag removal into the pipe 1 either with compressed gas injected through the injector nozzles 4c or separate therefrom.

From the foregoing, it will be appreciated that efficient operation of the pipe depends upon the pressure of gas admitted to the pipe through the injector nozzles 4c and the height of the inlet end of the pipe above the surface of the slag layer 6. There is a relationship between the flow rate of primary gas supplied to the pipe and the induced secondary flow which controls the removal of the liquid slag and ensures its passage through the apparatus. In general the ejector design, the flow rate supplied to it, and its distance from the slag surface should be such as to ensure a superficial gas velocity at the entrance to the pipe in the region of at least 40 m/sec. The required distance between the tip pipe section 2 and the slag surface may be controlled using a closed loop control incorporating a pipe height drive with feedback from position sensors arranged to detect the relative position between the tip section 2 and the free surface of the slag layer. A typical method of measuring the height is by optical line-of-sight systems.

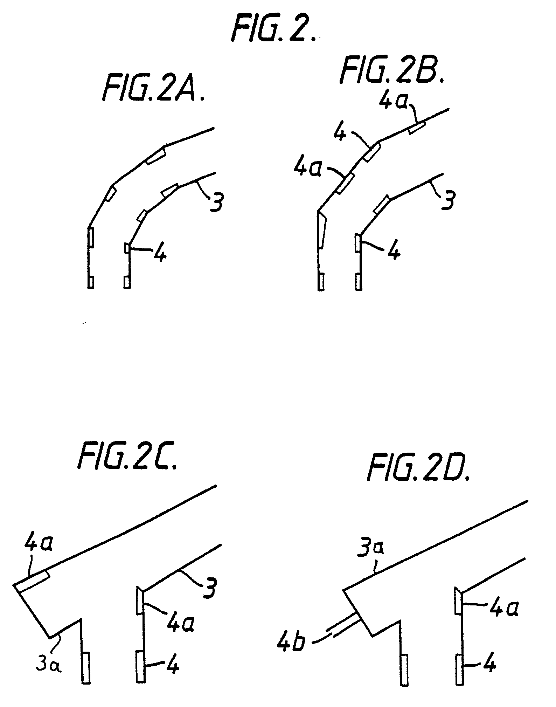

Four alternative constructions of the pipe 1 are schematically illustrated in Figure 2. The pipe 1 illustrated in Figure 2a comprises four tubular sections 3 in place of the three sections illustrated in Figure 1. Full annular injector assemblies 4 are positioned adjacent the inlet end of the pipe 1 and intermediate the adjacent pipe sections 3. The pipe illustrated in Figure 2b has three tubular sections 3 and includes, in addition to the annular injector assemblies 4, two part annular injector assemblies 4a positioned along the length of two adjoining pipe sections 3. The pipe illustrated in Figure 2c includes a section 3a closed at one end which is positioned to induce a flow of gas which passes across that admitted to the pipe through its inlet end. A further part annular injector assembly 4a is positioned towards the closed end of the pipe section 3a. The pipe illustrated in Figure 2d is similar to that illustrated in Figure 2c; in this construction however, one of the part annular injector assemblies 4a is replaced by a central injector assembly 4b.

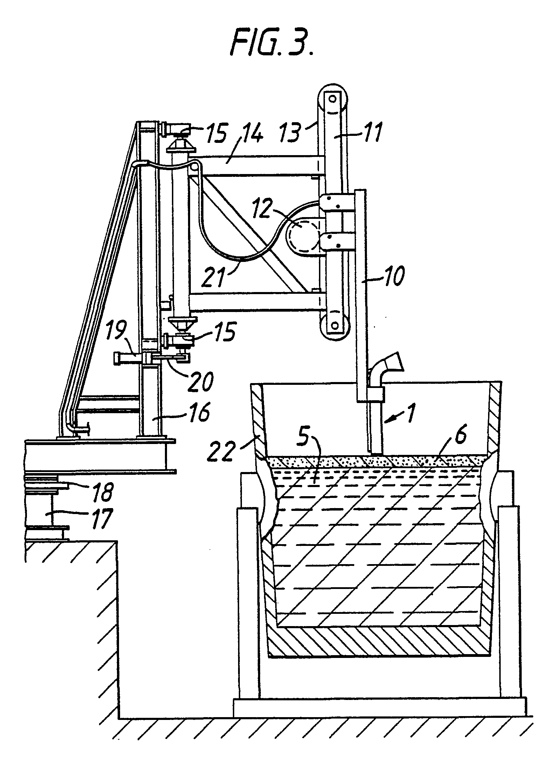

Ladles of liquid metal are normally transported by either an overhead crane or within a track mounted vehicle. Where ladles are handled by crane it is preferable that a device which can manipulate the pipe 1 away from or over the top of the ladle is incorporated. Typical manipulators for this purpose are shown in Figures 3 to 5.

Apparatus for supporting and locating the pipe 1 is illustrated in Figure 3. The pipe 1 is secured to an arm 10 movable vertically along a vertical guide track of a column 11 by means of a winch 12 connected to drive a continuous strand 13 which is anchored to the arm 10 and which passes over upper and lower pulleys mounted on the column 11. The column 11 forms part of a swinging support frame 14 supported between bearing pedestals 15 mounted on a support structure 16 fabricated from heavy steel sections and mounted on a turntable 17 comprising a slewing ring 18 and a motor driven gear box.

The frame is rotatable about a straight line joining the bearing pedestals by means of a pneumatically or hydraulically operated cylinder 19 carried by the structure 16 which co-operates with a lever arm 20 secured to the frame 14.

Gas under pressure is supplied to the injector assemblies of the ejector pipe 1 through a flexible pipe 21 connected to a source of pressurised gas.

As illustrated, the pipe 1 is located above the free surface of a layer of slag floating on the surface of a bath of molten metal contained in a ladle 22. Movement of the pipe towards and away from the slag surface is effected by operation of the winch 12 and movement of the pipe transverse to the slag surface is achieved by means of the cylinder 19 and by the turntable 17. All of these movements can readily be controlled either manually or through a programmable controller.

Solidified slag ejected from the pipe 1 may be collected in a suitably positioned collection vessel. Alternatively, or additionally, fume handling apparatus may be provided to enable transport of ejected material to a collection point without contact with the atmosphere.

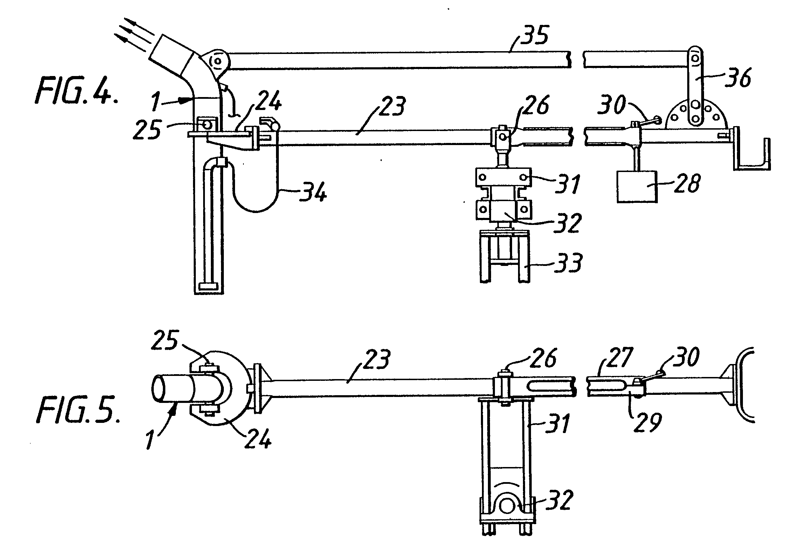

An alternative manually operable system for supporting and locating the pipe is illustrated in Figures 4 and 5. In this apparatus, the pipe is mounted at one end of a beam 23 by means of brackets 24 which receive trunnion arms 25 secured to the external surface of the pipe 1.

The beam 23 is supported in a forked pivot 26 which permits angular and rotational movement of the beam. The beam is retained in the pivot 26 by means of a sleeve 27 which encompasses the beam and which is fitted with a counter balance weight 28 for balancing the beam when carrying the ejector pipe 1. The sleeve 27 includes a clamping device 29 operable to prevent rotational movement of the beam about its longitudinal axis when the ejector pipe is in use. The clamping device can be released by movement of a lever 30 to enable the beam and ejector pipe 1 to be rotated through 90° for purposes of manipulating the arcuate pipe over the lip of a ladle before and after use.

As will be seen from Figure 5, the assembly of the beam 23 and pivot 26 is supported on an arm 31 which is, in turn, supported for pivotal movement within pedestal bearings 32 mounted on a fixed support frame 33.

Gas under pressure is conveyed to the injector assemblies of the ejector pipe 1 by a flexible hose 34.

Manual manipulation of the apparatus illustrated in Figures 4 and 5 is achieved by means of controls located at the end of the beam 23 remote from the pipe. Thus, the beam 23 may be rotated about its longitudinal axis when the clamping device 29 is released; the beam can be pivoted about the forked pivot 26 to move the pipe in a vertical sense; and, finally, the beam can be rotated about the pivot formed by the pedestal bearings 32 to enable the pipe 1 to sweep over the free surface of the material to be removed. The pipe 1 is maintained at a predetermined angle, normally vertical by means of a pivoting parallelogram formed by the pipe 1, the beam 23, a tie rod 35 and a lever 36.

In an alternative arrangement, vertical movement of the pipe may be accomplished by means of a mechanical jacking system.

Whereas the invention has been described above with reference to the removal of a material in liquid or solid form from the surface of a more dense fluid, it is to be understood that the invention may be employed to remove a material, such as a slag, from an otherwise empty vessel. The removed material may be discharged to a location spaced from the vessel or, particularly in the case of a liquid slag sprayed onto the walls of the vessel for insulation purposes or for protection from erosion or for rebuilding after erosion of refractory linings of metallurgical process vessels.

## Claims

1. A method of removing material (6) forming a layer on a surface in which an open-ended pipe (1), defining a passage between an inlet end and a discharge end, is positioned with the inlet end close to, but above, the material on the surface and the discharge end at a higher level than the inlet end, said pipe having an injector assembly (4) with at least one nozzle (4c) located in the passage; primary gas under pressure is supplied to the injector assembly (4), the flow of said primary gas causing a flow of secondary air to be introduced into the inlet end of the pipe which draws in the material (6) into the inlet end of the pipe and discharges it from the discharge end; characterised in that the cross-sectional area of the passage from the injector to the discharge end of the pipe is not less than the cross-sectional area of the passage at the injector and the primary gas is caused to flow substantially parallel to the longitudinal axis of the passage directly to the discharge end of the pipe and the flow of secondary air causes material (6) to form a peak (7) beneath the inlet end of the pipe from where the material is drawn into the pipe.

2. A method as claimed in claim 1, characterised in that the material to be removed is slag floating on a mass of molten metal.

3. Apparatus for removing material (6) forming a layer on a surface comprising an open-ended pipe (1) defining a passage between an inlet end and a discharge end; means (10) for supporting the pipe with the inlet end close to, but above, the material on the surface and the discharge end at a higher level than the inlet end; an injector assembly (4) having at least one nozzle (4c) located in the passage and means for supplying gas under pressure to the injector; characterised in that the cross-sectional area of the passage from the injector to the discharge end of the pipe is not less than the cross-sectional area of the passage at the injector.

4. Apparatus as claimed in claim 3, characterised in that at least one further injector assembly (4) having at least one nozzle (4c) is provided in the pipe between the first-mentioned injector assembly and the discharge end of the pipe and means are provided for supplying primary gas under pressure to the or each further injector assembly.

5. Apparatus as claimed in claim 4, characterised in that the pressure of the gas admitted to the injectors and its direction of entry into the pipe (1) is varied along the length and circumference of the pipe.

6. Apparatus as claimed in claim 3, 4 or 5, characterised in that the section (2) of the pipe (1) which, in use, lies immediately above the surface of the material to be removed is manufactured from a consumable heat resistant material and is detachably connected to the adjacent end of the pipe (1).

7. Apparatus as claimed in any one of claims 3 to 6, characterised in that the pipe (1) is supported above the surface of the material to be removed by a vertically movable frame (10, 14) mounted for pivotal movement in a direction transverse to the material surface.

8. Apparatus as claimed in any one of claims 3 to 7, characterised in that heating means are provided to heat the induced gas flow to a temperature in excess of that at which the induced gas is admitted to the pipe (1).

9. Apparatus as claimed in any one of claims 3 to 8, characterised in that at least one injector is connectable to a source of a coolant.

10. Apparatus as claimed in any one of claims 3 to 9, characterised in that means are provided to vibrate the pipe (1).

## Patentansprüche

1. Verfahren zum Entfernen von Material (6), das eine Schicht auf einer Oberfläche bildet, bei dem ein Rohr (1) mit offenem Ende so angeordnet ist, daß es zwischen einem Einlaßende und einen Auslaßende einen Durchgang bildet und das Einlaßende nahe, jedoch oberhalb des auf der Oberfläche vorhandenen Materials angeordnet und das Auslaßende auf einem höheren Pegel als das Einlaßende angeordnet ist, wobei das Rohr eine Einspritzanordnung (4) mit mindestens einer Düse (4c) innerhalb des Durchgangs enthält; bei dem der Einspritzanordnung (4) unter Druck stehendes Primärgas zugeführt wird und das Fließen des Primärgases bewirkt, und daß ein Sekundärluftstrom in das Einlaßende des Rohres hineinfließt, Material in das Einlaßende hineinzieht und aus dem Auslaßende wieder austreten läßt; dadurch gekennzeichnet, daß die Querschnittfläche des Durchgangs von der Einspritzvorrichtung bis zum Auslaßende des Rohres nicht kleiner ist als die Querschnittfläche des Durchgangs an der Einspritzvorrichtung under Fließpfad des Gases so gewählt ist, daß er im wesentlichen parallel zur Längsachse des Durchgangs unmittelbar zum Auslaßende des Rohres führt, und der Sekundärluftstrom bewirkt, daß Material (6) unterhalb des Einlaßendes des Rohres, von wo das Material in das Rohr hineingezogen wird, einen Gipfel (7) bildet.

2. Verfahren nach Anspruch 1, dadurch gekennzeichnet, daß in dem zu entfernenden Material Schlacke auf einer Masse geschmolzenen Metalls schwimmt.

3. Vorrichtung zum Entfernen von Material (6), das eine Schicht auf einer Oberfläche bildet, die ein Rohr (1) mit einem offenen Ende umfaßt, das zwischen einem Einlaßende und einem Auslaßende einen Durchgang bildet; mit Mitteln (10), die das Rohr so haltern, daß das Einlaßende nahe, jedoch oberhalb des Materials auf der Oberfläche angeordnet ist und daß das Auslaßende auf einem höheren Pegel als das Einlaßende angeordnet ist; mit einer Einspritzanordnung (4) mit mindestens einer Düse (4c) in dem Durchgang und Mitteln zum Zuführen von unter Druck stehendem Gas an die Einspritzvorrichtung, dadurch gekennzeichnet, daß die Querschnittfläche des Durchgangs von der Einspritzvorrichtung zum Auslaßende des Rohres nicht kleiner ist als die Querschnittfläche des Durchgangs an der Einspritzvorrichtung.

4. Vorrichtung nach Anspruch 3, dadurch gekennzeichnet, daß mindestens eine weitere Einspritzanordnung (4) mit mindestens einer Düse (4c) in dem Rohr zwischen der erstgenannten Einspritzanordnung und dem Auslaßende des Rohres angeordnet und Mittel zum Zuführen von unter Druck stehendem Primärgas an die weitere oder alle weiteren Einspritzanordnungen vorgesehen sind.

5. Vorrichtung nach Anspruch 4, dadurch gekennzeichnet, daß der Druck des den Einspritzvorrichtungen zugeführten Gases sowie die Eintrittsrichtung in das Rohr (1) entlang der Länge und dem Umfang des Rohres verändert wird.

6. Vorrichtung nach Anspruch 3, 4 oder 5, dadurch gekennzeichnet, daß der Abschnitt (2) des Rohres (1), der im Betrieb unmittelbar oberhalb der zu entfernenden Oberfläche des zu entfernenden Materials angeordnet ist, aus einem verbrauchbaren, hitzebeständigen Material gerfertigt und abnehmbar mit dem benachbart angeordneten Ende des Rohres (1) verbunden ist.

7. Vorrichtung nach einem der Ansprüche 3 bis 6, dadurch gekennzeichnet, daß das Rohr (1) oberhalb der Oberfläche des zu entfernenden Materials von einem in vertikaler Richtung bewegbaren Rahmen (10, 14) gehaltert wird, der quer zur Materialoberfläche schwenkbar gelagert ist.

8. Vorrichtung nach einem der Ansprüche 3 bis 7, dadurch gekennzeichnet, daß Heizmittel zum Erwärmen das induzierten Gasflusses auf eine Temperatur vorgesehen sind, die über der Temperatur liegt mit der das induzierte Gas in das Rohr (1) eingelassen wird.

9. Vorrichtung nach einem der Ansprüche 3 bis 8, dadurch gekennzeichnet, daß mindestens eine Einspritzvorrichtung an eine Hühlmittelquelle anschließbar ist.

10. Vorrichtung nach einem der Ansprüche 3 bis 9, dadurch gekennzeichnet, daß Mittel zum Vibrieren des Rohres (1) vorgesehen sind.

**Revendications**

1. Procédé pour évacuer des matières (6) formant une couche sur une surface dans lequel un tuyau (1) dont les extrémités sont ouvertes, qui délimite un passage entre l'extrémité d'entrée et l'extrémité de sortie, est placé de façon que son extrémité d'entrée soit proche, mais néanmoins au-dessus, de la matière présente sur ladite surface, ledit tuyau comportant un injecteur (4) pourvu d'une buse (4c) logé dans ce passage; l'injecteur (4) étant alimenté avec un gaz primaire sous pression dont le jet fait entrer, par l'extrémité d'entrée dudit tuyau, un courant d'air secondaire qui aspire la matière (6) dans l'extrémité d'entrée du tuyau et le fait ressortir par son extrémité de sortie, caractérisé en ce que l'aire de la section du passage s'étendant entre l'injecteur et l'extrémité de sortie du tuyau n'est pas inférieure à l'aire de la section du passage de l'injecteur, et en ce que le gaz primaire est obligé de s'écouler suivant une trajectoire pratiquement parallèle à l'axe longitudinal du passage vers l'extrémité de sortie du tuyau, cependant que le courant d'air secondaire fait que la matière (6) forme, sous l'extrémité d'entrée du tuyau, un pic ou une pointe (7) duquel la matière est aspirée dans le tuyau.

2. Procédé selon la revendication 1, caractérisé en ce que la matière devant être enlevée ou aspirée est le laitier ou la crasse flottant à la surface d'un bain de métal en fusion.

3. Appareil pour enlever une matière (6) formant une couche sur une surface, qi comprend un tuyau (1) dont les extrémités ouvertes délimitent un passage entre l'extrémité d'entrée et l'extrémité de sortie; des moyens (10) pour supporter le tuyau de manière que son extrémité d'entrée soit proche, mais néanmoins au-dessus, de la matière s'étendant sur ladite surface et pour que son extrémité de sortie soit à un niveau plus élevé que son extrémité d'entrée; un injecteur (4) comportant, au moins, une buse (4c) logée dans ledit passage et des moyens pour alimenter ledit injecteur avec un gaz sous pression, caractérisé en ce que, entre l'injecteur et l'extrémité de sortie du tuyau, l'aire de la section du passage n'est pas inférieure à l'aire de la section du passage à l'injecteur.

4. Appareil selon la revendication 3, caractérisé en ce que, au moins, un second injecteur (4), comportant une buse (4c) au moins, est monté dans le tuyau, entre le premier injecteur (4) et l'extrémité de sortie du tuyau, et en ce que des moyens sont prévus pour alimenter avec un gaz primaire sous pression ce ou chacun de ces injecteurs supplémentaires.

5. Appareil selon la revendication 4, caractérisé en ce que la pression du gaz alimentant les injecteurs et sa direction d'entrée dans le tuyau (1) varient le long de la circonférence du tuyau.

6. Appareil selon l'une quelconque des revendications 3, 4 ou 5, caractérisé en ce que la section (2) du tuyau (1) qui, en service, est située immédiatement au-dessus de la surface de la matière devant être enlevée est fait d'une matière consumable, résistante à la chaleur, et est fixée de manière détachable à l'extrémité adjacente du tuyau (1).

7. Appareil selon l'une quelconque des revendications 3 à 6, caractérisé en ce que le tuyau (1) est supporté au-dessus de la surface de la matière devant être enlevée par un châssis mobile verticalement (10, 14) monté à pivotement dans une direction perpendiculaire à la surface de la matière.

8. Appareil selon l'une quelconque des revendications 3 à 7, caractérisé en ce que des moyens sont prévus pour chauffer le courant d'air aspiré à une température supérieure à celle à laquelle le gaz aspiré est admis dans le tuyau (1).

9. Appareil selon l'une quelconque des revendications 3 à 8, caractérisé en ce que l'une, au moins, des buses est raccordée à une source de réfrigérant.

10. Appareil selon l'une quelconque des revendications 3 à 9, caractérisé en ce que des moyens sont prévus pour faire vibrer le tuyau (1).

## FIG. 1.

# FIG.2.

## FIG.2A.

4

3

4

## FIG.2B.

4a

4

4a

3

4

## FIG.2C.

4a

3

4a

3a

4

## FIG.2D.

3a

4a

4b

4

2

# FIG. 3.

FIG.4.

FIG.5.

EP 0 176 536 B1